# FASCICULE DE BREVET EUROPEEN

(11) **EP 4 330 065 B1**
(45) Date de publication et mention de la délivrance du brevet: **01.01.2025**
(21) Numéro de dépôt: 22713985.4
(22) Date de dépôt: 14.03.2022
(51) Int. Cl.: B60K 1/00, B62D 21/11, B62D 21/15

(54) **DISPOSITIF CALE DE TRAIN ARRIÈRE FUSIBLE EN CAS DE CHOC ARRIÈRE POUR AUGMENTER LE RENDEMENT DE COMPRESSIBILITÉ DE LA STRUCTURE**
DURCH RÜCKWÄRTIGE STOSSEINWIRKUNG AUFLÖSBARE HINTERE KEILVORRICHTUNG ZUR ERHÖHUNG DER KOMPRIMIERBAREN EFFIZIENZ DER STRUKTUR
REAR IMPACT-FUSIBLE REAR END WEDGE DEVICE FOR INCREASING THE COMPRESSIBILITY EFFICIENCY OF THE STRUCTURE

(30) Priorité: 29.04.2021 FR 2104488
(43) Date de publication de la demande: 06.03.2024
(73) Titulaire: Stellantis Auto SAS, 78300 Poissy (FR)
(72) Inventeur: ZEITOUNI, Richard, 78390 BOIS D ARCY (FR); PERU, Marc, 92290 CHATENAY MALABRY (FR); FONFREDE, Stephane, 90000 BELFORT (FR); CHERMAT, Matthieu, 95120 ERMONT (FR); YANG, Lu, 78140 VELIZY VILLACOUBLAY (FR)
(74) Mandataire: BCIP
(86) Numéro de dépôt international: PCT/FR2022/050457
(87) Numéro de publication internationale: WO 2022/229527

(56) Documents cités:
- EP-A1- 3 069 962
- US-A1- 2019 217 893
- US-A1- 2020 102 014

## Description

L'invention se situe dans le domaine des équipements de sécurité passive de véhicule. En particulier, l'invention se situe dans le domaine de la protection des véhicules contre les collisions arrière.

Les règlementations actuelles obligent les constructeurs de véhicules automobiles à respecter certaines contraintes au niveau de la sécurité et à faire réaliser des tests afin d'obtenir les homologations nécessaires à leur commercialisation. Ainsi, les règlementations en Europe, au Japon et dans la majorité des pays du monde imposent de dimensionner le véhicule pour un choc arrière dans lequel le véhicule est percuté par une barrière rigide à la vitesse de 50 km/h. Aux Etats-Unis, le protocole de choc arrière est plus sévère. Dans ce protocole, le véhicule est percuté à l'arrière par une barrière de 1368 kg de type NHTSA (acronyme de « National Highway Traffic Safety Administration ») à grande vitesse (80 km/h) et sur une zone de recouvrement décalée, c'est-à-dire avec 70% de recouvrement de la largeur du véhicule tel que relevé à l'essieu droit arrière. Il s'agit donc de chocs à haute énergie, avec une barrière de grande dimension très raide et qui est très agressive pour le véhicule.

Par ailleurs, le développement des véhicules de type hybride comprenant à la fois une motorisation de type électrique et une motorisation de type thermique peut s'accompagner d'une nouvelle conception de la structure du véhicule notamment au niveau du soubassement et, par exemple, au niveau de la partie arrière de ce soubassement. Dans certains cas, l'implantation d'un moteur électrique à l'arrière du véhicule peut s'accompagner d'un changement du train arrière en faveur d'un train multi-bras avec quatre points de fixation sur les longeronnets et qui peut servir de cadre audit moteur électrique.

L'emploi d'un train arrière multi-bras dans le cadre d'un véhicule hybride est décrit dans le document FR3049920. Ce document concerne un agencement de la partie arrière d'une structure de soubassement pour un véhicule automobile hybride rechargeable comprenant un berceau arrière prolongé à chacune de ses extrémités par deux bras, avant et arrière, sur lesquels des points de fixation permettent de fixer le berceau à la carrosserie et au train arrière. Les organes du véhicule comprennent une batterie basse tension, une batterie haute tension, un chargeur de batterie, un réservoir de carburant et un silencieux d'échappement qui sont disposés au niveau de ladite partie arrière de la structure de soubassement. La position des points d'attache des bras arrière du berceau arrière définissent une position de référence dans la direction longitudinale du véhicule, à l'arrière de laquelle ledit silencieux d'échappement est disposé, et à l'avant de laquelle sont disposés les autres organes précités du véhicule.

Malheureusement l'emploi d'un tel train arrière multi-bras limite les possibilités de déformation des longeronnets, réduit le potentiel d'absorption d'énergie de la structure arrière et donc dégrade les performances du véhicule en cas de collision arrière à haute vitesse. Une solution reste à trouver pour répondre à cette problématique.

Les documents US 2020/102014 A1 et EP 3 069 962 A1 décrivent des véhicules automobiles à motorisation électrique comprenant une paire de longeronnets et un berceau arrière.

L'invention a pour objectif de répondra à au moins un des problèmes ou inconvénients rencontrés dans l'art antérieur. L'invention a donc pour objectif de proposer un véhicule à motorisation hybride comprenant à la fois un train arrière multi-bras et des performances d'amortissement d'un choc arrière à grande vitesse améliorées. En particulier, l'invention a pour objectif de proposer un véhicule à motorisation hybride comprenant à la fois un train arrière multi-bras et des moyens d'amélioration du comportement du véhicule en termes de compressibilité de la structure de soubassement arrière ; de préférence, lesdits moyens sont des moyens passifs.

A cet effet, et selon un premier aspect, l'invention a pour objet un véhicule automobile à motorisation électrique ou hybride comprenant une paire de longeronnets et un berceau arrière agencé pour supporter un groupe de propulsion électrique, le berceau arrière comprend une zone centrale s'étendant selon la direction transversale du véhicule et prolongée à chacune de ses extrémités par deux bras, respectivement un bras avant et un bras arrière, le berceau arrière est fixé aux longeronnets par ses bras avant et arrière; le véhicule est remarquable en ce que la fixation de chacun des bras arrière du berceau arrière sur les longeronnets se fait au moyen d'un dispositif de fixation en deux parties configurées pour se séparer sous l'action d'une force de traction supérieure à un seuil prédéterminé.

Comme on l'aura compris à la lecture de la définition qui vient d'en être donnée, l'invention permet une rupture de la fixation entre le berceau arrière et les longeronnets au niveau des bras arrière dudit berceau arrière par l'emploi d'un dispositif de fixation en deux parties assemblées entre elles pouvant, sous certaines conditions, se décrocher l'une de l'autre. La rupture des dispositifs de fixation arrière du berceau arrière permet au longeronnet de poursuivre sa déformation et donc améliore les capacités du véhicule à absorber les chocs par une augmentation de la compressibilité de ladite structure lors d'une collision arrière. L'invention permet ainsi de réduire la dimension du porte à faux arrière du véhicule grâce à l'augmentation de la compressibilité de la structure. De plus, le coût du véhicule n'est pas augmenté.

Selon un mode de réalisation préféré de l'invention, les deux parties sont configurées pour se séparer sous l'action d'une force de traction supérieure à un seuil prédéterminé, ladite force de traction étant orientée selon la direction longitudinale du dispositif de fixation qui est préférentiellement orientée verticalement. Ainsi, de préférence, le dispositif de fixation est en deux parties configurées pour se séparer sous l'action d'une force de traction supérieure à un seuil prédéterminé, ladite force de traction étant orientée verticalement. En effet, il a été constaté que lors d'une collision arrière les longeronnets avaient tendance à se redresser alors que le berceau arrière avait tendance à fléchir vers le vas. On aura compris que la cinématique d'écartement selon la direction verticale entre le berceau et les longeronnets ne se produit qu'en cas de chocs à grande vitesse. Le dispositif de fixation selon l'invention tire parti de cette observation et est donc rendu fusible selon cette direction. Le dispositif de fixation selon l'invention est remarquable en ce qu'il est adapté pour être fusible dans les conditions d'une collision arrière à grande vitesse d'un véhicule mais pas dans les conditions normales de roulage du véhicule.

Selon un mode de réalisation préféré de l'invention, le dispositif de fixation comprend une partie externe et une partie interne, la partie externe formant un logement et la partie interne comprenant au moins un bloc, le ou les blocs étant disposés dans le logement.

Ainsi, une autre définition de l'invention se lira : un véhicule automobile à motorisation électrique ou hybride comprenant une paire de longeronnets et un berceau arrière agencé pour supporter un groupe de propulsion électrique, le berceau arrière comprend une zone centrale s'étendant selon la direction transversale du véhicule et prolongée à chacune de ses extrémités par deux bras, respectivement un bras avant et un bras arrière, le berceau arrière est fixé aux longeronnets par ses bras avant et arrière; le véhicule est remarquable en ce que la fixation de chacun des bras arrière du berceau arrière sur les longeronnets se fait au moyen d'un dispositif de fixation en deux parties ; une des parties étant fixée à un bras arrière du berceau arrière et l'autre partie étant fixée à un longeronnet ; de préférence, le dispositif de fixation comprend une partie externe et une partie interne, la partie externe formant un logement et la partie interne comprenant au moins un bloc, le ou les blocs étant disposés dans le logement et la partie externe est fixée à un bras arrière du berceau arrière.

On notera que des dispositifs de fixation en deux parties sont connus et utilisés dans le cadre d'amortissement des vibrations générées par le roulage d'un véhicule. Ainsi, le document US7104533 décrit un dispositif d'amortissement de vibrations cylindrique comprenant une douille en caoutchouc ayant un corps élastique en caoutchouc reliant élastiquement un manchon intérieur et un manchon extérieur en résine; un élément de montage rigide ayant un alésage cylindrique dans lequel la douille en caoutchouc est ajustée par pression; une face en escalier d'engagement formée sur une surface intérieure de l'élément de montage; et une face étagée engagée produite sur une surface extérieure du manchon extérieur une fois que le manchon extérieur est ajusté par pression dans l'alésage cylindrique de l'élément de montage, au moyen d'une déformation élastique du manchon extérieur. La face étagée engagée est opposée à la face étagée d'engagement dans une direction axiale du dispositif, et est amenée en engagement avec la face étagée d'engagement de manière à présenter une résistance au délogement de la douille en caoutchouc de l'élément de montage dans directions axiales opposées.

De même, le document JP5291981 décrit un dispositif permettant d'éviter la génération d'un son anormal par contact entre un cylindre extérieur et un manchon. La structure de montage de manchon d'un dispositif de contrôle des vibrations est formée en engageant par friction une surface périphérique extérieure du cylindre extérieur avec une surface périphérique intérieure du manchon, en appuyant sur le dispositif de contrôle des vibrations ayant le cylindre extérieur et un corps élastique en caoutchouc solidarisé à une surface périphérique intérieure de ce cylindre extérieur, dans le manchon sous déformation diamétralement contractuelle du cylindre extérieur. La longueur enfoncée sur le manchon du cylindre extérieur en résine synthétique est formée plus courte que la longueur dans la direction axiale du manchon. Une bande de projection faisant saillie vers l'extérieur dans la direction radiale et s'étendant dans la direction périphérique du cylindre extérieur est formée dans une partie d'extrémité du manchon sur une surface périphérique extérieure de pointe dans la direction d'enfoncement.

Comme il sera vu en détail, l'invention diffère des dispositifs décrit ci-dessus, notamment dans sa fonction, puisque le délogement de la partie interne est souhaité pour favoriser la compressibilité de la structure arrière, mais également dans sa structure, puisque l'invention propose une architecture permettant un réglage de la force nécessaire au délogement de la partie interne. Enfin, l'invention diffère de l'art antérieur par l'implantation dudit dispositif de fixation à l'interface entre le berceau arrière et les longeronnets.

Comme on l'aura compris, avantageusement, le dispositif de fixation comprend deux parties et une des parties est fixée à un des bras arrière du berceau arrière et l'autre partie est fixée à un des longeronnets.

Ainsi, de manière préférentielle, le dispositif de fixation comprend une partie externe et une partie interne et la partie externe est fixée à un des bras arrière du berceau arrière et la partie interne est fixée à un des longeronnets par l'intermédiaire d'un axe ; de préférence, l'axe a un diamètre supérieur ou égal à 9 mm.

De manière alternative, le dispositif de fixation comprend une partie externe et une partie interne et la partie externe est fixée à un des longeronnets et la partie interne est fixée à un des bras arrière du berceau arrière par l'intermédiaire d'un axe ; de préférence, l'axe a un diamètre supérieur ou égal à 9 mm.

Quelle que soit la configuration choisie, le dispositif de fixation comprend, de préférence, une partie externe et une partie interne, et la partie externe comprend au moins une paroi latérale et comprend en outre une paroi supérieure et une paroi inférieure et au moins la paroi supérieure et/ou la paroi inférieure comprend une ouverture pour le passage d'un axe.

Selon une mise en oeuvre de l'invention, le rapport entre le diamètre de l'ouverture montrée par la paroi supérieure et/ou la paroi inférieure et le diamètre du ou d'au moins un des blocs est compris entre 0,60 et 0,95 ; de préférence entre 0,75 et 0,90.

De manière complémentaire ou alternative, l'ouverture montrée par la paroi supérieure et/ou la paroi inférieure est circonvenue par un chanfrein formant un angle avec la ou les parois latérales compris entre 30 et 60° ; de préférence compris entre 30 et 45°.

De manière avantageuse, la paroi supérieure et/ou inférieure est assemblée à la ou les parois latérales par des vis de fixation ; de préférence, par au moins trois vis de fixations.

De manière optionnelle, la paroi supérieure ou inférieure est assemblée à la ou aux parois latérales par au plus trois vis de fixation. Cette configuration permet une séparation de la paroi supérieure ou de la paroi inférieure sous la pression exercée par le ou les blocs et donc le délogement de la partie interne entrainant avec elle l'une des parois supérieure ou inférieure.

Selon une mise en oeuvre préférée de l'invention, le dispositif de fixation comprend une partie externe et une partie interne, la partie interne comprenant au moins un bloc et le ou les blocs sont constitués par un matériau élastique déformable choisi dans la liste comprenant le cis 4-polyisoprène, le polyisoprène synthétique, le polybutadiène, le copolymère styrène-butadiène, le polyisobutylène, le chloroprène, le copolymère butadiène-acrylonitrile, le copolymère éthylène-propylène, le terpolymère, le polyéther bloc amide, les thermoplastiques élastomères, les polyuréthanes, les polysulfures, les élastomères silicone, les fluoroélastomères, les perfluoroélastomères, le copolymère éthylène-acétate de vinyle, les élastomères polyacryliques, le polyéthylène chlorosulfoné, les élastomères d'épichlorhydrine ; de préférence, choisi dans la liste comprenant les élastomères silicone, les thermoplastiques élastomères et les polyuréthanes.

De préférence, le dispositif de fixation comprend une partie externe et une partie interne, la partie interne comprenant au moins un bloc et le ou les blocs sont montés sur un axe et retenus en position sur ledit axe par au moins une bague.

Selon un deuxième aspect, l'invention concerne l'utilisation d'un dispositif de fixation pour la fixation d'un bras arrière d'un berceau arrière multi-bras sur un longeronnet d'un véhicule automobile à motorisation électrique ou hybride, l'utilisation étant remarquable en ce que le dispositif de fixation comprend deux parties respectivement une partie externe et une partie interne, la partie externe formant un logement et la partie interne comprenant au moins un bloc, le ou les blocs étant disposés dans le logement ; les deux parties étant configurées pour se séparer sous l'action d'une force de traction supérieure à un seuil prédéterminé ; de préférence, ladite force de traction est orientée verticalement.

L'invention sera bien comprise et d'autres aspects et avantages apparaîtront clairement à la lecture de la description qui suit donnée en référence à la planche de dessins annexée sur laquelle :
[Fig. 1] La figure 1 est une vue de dessous d'un véhicule selon l'invention.
[Fig. 2] La figure 2 illustre la cinématique de rupture des dispositifs de fixation selon l'invention.
[Fig. 3] La figure 3 est une vue en coupe avec perspective de la partie externe du dispositif de fixation selon l'invention.
[Fig. 4] La figure 4 est une vue similaire à celle de la figure 3 dans laquelle la partie interne a été ajoutée.
[Fig. 5] La figure 5 est une vue en coupe d'un dispositif de fixation selon l'invention.
[Fig. 6] La figure 6 est une vue similaire à celle de la figure 5 montrant la déformation en compression d'un dispositif de fixation selon l'invention.
[Fig. 7] La figure 7 illustre les possibilités de déformation de la partie interne.
[Fig. 8] La figure 8 est une vue similaire à celle de la figure 5 montrant la cinématique de rupture d'un dispositif de fixation selon l'invention.
[Fig. 9] La figure 9 est une vue similaire à celle de la figure 8 montrant la poursuite de la cinématique de rupture d'un dispositif de fixation selon l'invention.

Dans la description qui suit, le terme « comprendre » est synonyme de « inclure » et n'est pas limitatif en ce qu'il autorise la présence d'autres éléments ou moyens dans le véhicule auquel il se rapporte, ou d'autres étapes dans l'utilisation considérée. Il est entendu que le terme « comprendre » inclut les termes « consister en ». De même, les termes « intérieur », « extérieur », « avant », « arrière » s'entendront par rapport à l'orientation générale du véhicule, tel que pris selon son sens normal de marche. Sur les différentes figures, les mêmes références désignent des éléments identiques ou similaires.

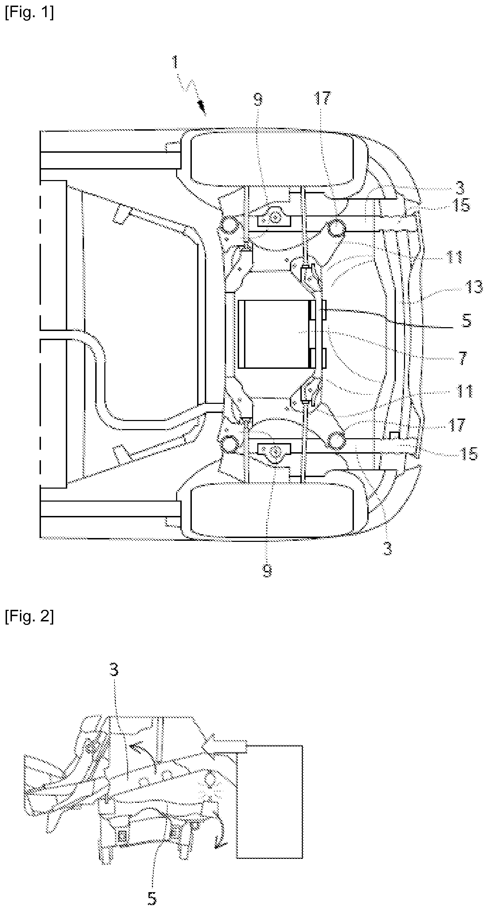

La figure 1 illustre l'architecture générale d'un véhicule 1 selon l'invention tel que vu de dessous et dans sa partie arrière. Le véhicule est un véhicule automobile 1 à motorisation électrique ou hybride comprenant une paire de longeronnets 3 et un berceau arrière 5 agencé pour supporter un groupe de propulsion électrique 7. Le berceau arrière 5 comprend une zone centrale s'étendant selon la direction transversale du véhicule et prolongée à chacune de ses extrémités par deux bras (9, 11), respectivement un bras avant 9 et un bras arrière 11. Le berceau arrière 5 est fixé aux longeronnets 3 par ses bras (9, 11). Les longeronnets 3 sont reliés à la poutre arrière 13 de pare-chocs du véhicule par le biais d'absorbeurs 15, et sont conçus pour se déformer en cas de choc brutal, de manière à absorber l'énergie cinétique du choc.

L'invention est remarquable en ce que la fixation d'au moins un des bras arrière 11 et de préférence de chacun des bras arrière 11 du berceau arrière 5 sur les longeronnets 3 se fait au moyen d'un dispositif de fixation 17 en deux parties (19, 29) configurées pour se séparer sous l'action d'une force de traction supérieure à un seuil prédéterminé ; de préférence, ladite force de traction est orientée verticalement.

On aura compris qu'avantageusement, le dispositif de fixation comprenant deux parties, une des parties est fixée à un des bras arrière du berceau arrière et l'autre partie est fixée à un des longeronnets.

Selon une mise en oeuvre préférée de l'invention, les dispositifs de fixation 17 sont en deux parties (19, 29) configurées pour se séparer sous l'action d'une force de traction supérieure à un seuil prédéterminé, ladite force de traction étant orientée verticalement. En effet, il a été observé que lors de la cinématique du choc arrière les fixations des bras arrière 11 du berceau sont d'abord sollicitées en compression, du fait du contact avec l'élément avec lequel le véhicule est entré en collision. Puis, les dispositifs de fixation sont sollicités en traction selon la direction verticale du fait du redressement des longeronnets suite à leur déformation et au fléchissement vers le bas du berceau arrière.

L'invention profite de cette cinématique de chocs pour rendre le ou les dispositifs de fixation 17 fusibles selon la direction verticale à savoir lorsqu'ils sont soumis à une force de traction orientée verticalement et supérieure à une valeur seuil prédéterminée. La force de traction tend à écarter selon la direction verticale les longeronnets du berceau arrière afin de permettre aux longeronnets choc. Le décrochement entre le berceau arrière 5 et les longeronnets 3 au niveau des bras arrière lors d'un choc est illustré en figure 2. On comprend que le dispositif de fixation s'est ouvert, une des parties du dispositif de fixation est restée fixée sur le longeronnet tandis que l'autre partie est restée solidaire du berceau arrière.

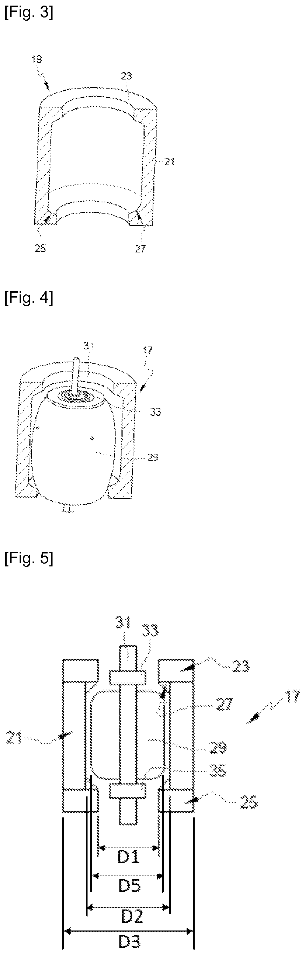

Selon un mode de réalisation préféré illustré en figures 3 à 9, les dispositifs de fixation 17 utilisés pour la fixation des bras arrière du berceau multi-bras au longeronnet, comprennent deux parties (19, 29) respectivement une partie externe 19 et une partie interne 29, la partie externe 19 formant un logement et la partie interne 29 comprenant au moins un bloc, le ou les blocs étant disposés dans le logement.

La figure 3 représente la partie externe 19 du dispositif de fixation. La partie externe 19 comprend au moins une paroi latérale 21 et comprend en outre une paroi supérieure 23 et une paroi inférieure 25. Dans l'exemple de réalisation illustré, la partie externe 19 comprend une paroi latérale 21 cylindrique. Avantageusement, au moins la paroi supérieure 23 et/ou la paroi inférieure 25 comprend une ouverture pour le passage d'un axe 31 (représenté en figures 4 et 5). L'axe est avantageusement d'un diamètre supérieur ou égal à 9 mm, par exemple en 10 et 15 mm, pour permettre d'assurer une fixation solide. On comprend que la partie externe 19 forme un logement qui va recevoir la partie interne 29 comprenant au moins un bloc comme illustré en figures 4 et 5. Dans la suite de l'exposé, il sera fait référence à une partie interne 29 comprenant un seul bloc, néanmoins l'homme du métier adaptera sans peine la description qui suit à une partie interne comprenant deux blocs ou plus.

La partie externe 19 est préférentiellement réalisée en un matériau métallique, par exemple en acier. Avantageusement, au moins une des parois supérieure 23 ou inférieure 25 est assemblée à la ou aux parois latérales 21 par vissage, afin de permettre l'assemblage du dispositif de fixation et en particulier l'insertion de la partie interne 29 dans le logement.

En effet, la partie interne est d'une taille inférieure ou égale à la taille du logement mais montre un diamètre supérieur à la taille des ouvertures montrées au niveau de la paroi supérieure 23 et/ou de la paroi inférieure 25 du logement. Ainsi, le diamètre D5 de la partie interne est inférieur ou égal au diamètre interne D2 de la partie externe, de préférence inférieur de 2 à 20 % ; plus préférentiellement, inférieur de 4 à 15 % ou de 6 à 10 %. Ainsi le diamètre D5 de la partie interne est supérieur ou égal au diamètre D1 de l'ouverture de la partie externe, de préférence supérieur de 2 à 20 % ; plus préférentiellement, supérieur de 4 à 15 % ou de 6 à 10 %. Le logement constitue donc une cage dans laquelle le bloc est enfermé. Le bloc est monté sur un axe 31 traversant l'ouverture de la paroi supérieure 23 et/ou de la paroi inférieure 25 du logement, dans le cas d'une pluralité de blocs, les différents blocs se succèdent le long de l'axe. Le bloc est maintenu en position sur ledit axe 31 par au moins une bague (33, 35) et de préférence par deux bagues (33, 35), à savoir une bague supérieure 33 et une bague inférieure 35.

Le ou les blocs 29 sont préférentiellement constitués d'un matériau élastique déformable, par exemple d'un matériau choisi dans la liste comprenant cis 4-polyisoprène, le polyisoprène synthétique, le polybutadiène, le copolymère styrène-butadiène, le polyisobutylène, le chloroprène, le copolymère butadiène-acrylonitrile, le copolymère éthylène-propylène, le terpolymère, le polyéther bloc amide, les thermoplastiques élastomères, les polyuréthanes, les polysulfures, les élastomères silicone, les fluoroélastomères, les perfluoroélastomères, le copolymère éthylène-acétate de vinyle, les élastomères polyacryliques, le polyéthylène chlorosulfoné, les élastomères d'épichlorhydrine. De préférence, le ou les blocs 29 sont préférentiellement constitués d'un matériau choisi dans la liste comprenant les élastomères silicone, les thermoplastiques élastomères et les polyuréthanes. De préférence encore le ou les blocs 29 sont préférentiellement constitués en polyuréthane.

L'emploi d'un matériau élastomère, apte à la déformation offre plusieurs avantages, comme par exemple une absorption des vibrations et un amortissement des contraintes lors du roulage du véhicule.

Selon l'invention, le dispositif de fixation 17 fait office d'interface fusible entre le berceau arrière et le longeronnet. Dans une mise en oeuvre préférée de l'invention, le logement est fixé au berceau et l'axe portant le bloc est fixé au longeronnet. La configuration inverse dans laquelle le logement est fixé au longeronnet et l'axe portant le bloc est fixé au berceau est également possible.

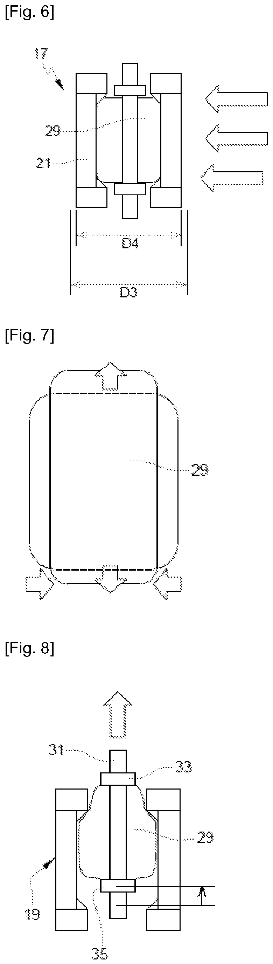

Quelle que soit la configuration choisie, le dispositif de fixation fusible fonctionne comme suit. En fonctionnement normal, la partie interne 29 (c'est-à-dire le ou les blocs) est agencée dans le logement formé par la partie externe 19. La partie interne 29 est retenue dans ledit logement assurant la fixation entre le longeronnet et le berceau arrière. En cas de choc arrière, comme illustré en figure 6, la présence de la partie interne à l'intérieur de la partie externe va participer à la résistance du dispositif de fixation qui est tout d'abord sollicité en compression. En effet, la partie externe voit son diamètre initial D3 être diminué jusqu'à un diamètre comprimé D4. Avantageusement, le diamètre rétréci D4 est inférieur de 10% environ par rapport au diamètre initial. La partie interne 29 est préférentiellement également comprimée selon sa direction transversale comme illustré sur la figure 7 et entame une déformation selon sa direction longitudinale, ce qui va lui permettre d'amorcer sa sortie du logement.

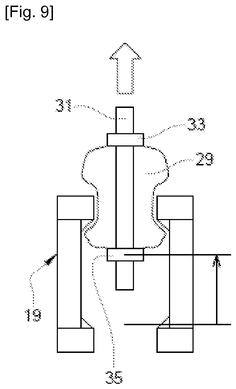

Si le choc est suffisamment violent pour générer un écartement entre les longeronnets et le berceau arrière, des forces de traction verticales selon des sens opposées sont alors appliquées sur les parties interne et externe. La partie interne 29 est alors extraite du logement par une des ouvertures permettant le passage de l'axe 31 comme illustré sur les figures 8 et 9. Une fois que la partie interne est hors du logement la fixation est rompue et le longeronnet peut poursuivre sa déformation.

Cette rupture ou décrochage entre les parties interne et externe peut se faire de plusieurs façons. Dans un mode de réalisation illustré aux figures 8 et 9, le bloc va se déformer pour sortir du logement par l'ouverture de la paroi supérieure de la partie externe. Dans le cas, non représenté, où l'axe est fixé au berceau arrière, la partie interne (c'est-à-dire le bloc) va se déformer pour sortir du logement par l'ouverture de la paroi inférieure de la partie externe.

La sortie de la partie interne 29 du logement par une des ouvertures suppose une fixation solide entre les parois supérieure et/ou inférieure de partie externe et la ou les parois latérales. Cette fixation solide peut être obtenue par l'emploi de quatre vis de fixation ou plus entre la paroi supérieure, ou inférieure, et la ou les parois latérales. Dans un mode de réalisation non représenté, une des parois supérieure ou inférieure est venue de matière avec la paroi latérale de sorte à ne pas pouvoir être désassemblées.

Dans un mode de réalisation non représenté, lorsque trois vis de fixation ou moins sont utilisées, la partie externe peut se désassembler et la partie interne sort du logement en emportant avec elle la paroi supérieure ou la paroi inférieure selon la configuration choisie, sans traverser son ouverture.

Dans les modes de réalisation selon lesquels la partie interne traverse l'ouverture d'une des parois inférieure ou supérieure pour sortir du logement, l'homme du métier aura avantage à placer un chanfrein 27 entre la paroi latérale 21 et la paroi supérieure 23 (ou inférieure 25 selon le cas) à l'intérieur du logement. La présence d'un chanfrein 27 permet d'amorcer et de faciliter la déformation du ou des blocs formant la partie interne 29 lors de son passage au niveau de l'ouverture de la paroi supérieure 23 ou inférieure 25 de la partie externe 19.

La force nécessaire à la rupture du dispositif de fixation 17, en l'occurrence, dans l'exemple illustré, la force nécessaire à la désolidarisation des parties interne 29 et externe 19 par le passage du bloc au travers de l'ouverture de la paroi supérieure, sera ajustée par l'homme du métier en jouant sur le rapport entre le diamètre de l'ouverture que la partie interne 19 doit traverser et le diamètre la partie interne 19; et sur la présence ou non d'un chanfrein 27 circonvenant l'ouverture que la partie interne 19 doit traverser (et en cas de présence de ce chanfrein 27 l'angle qu'il présente par rapport à la paroi latérale, généralement placée verticalement). Les trois paramètres associés sont donc le diamètre de la partie interne 19, le diamètre de l'ouverture et l'angle du chanfrein 27 par rapport à la verticale (un angle de 90° étant représentatif d'une absence de chanfrein).

Par exemple, l'angle du chanfrein 27 sera compris entre 30 et 60° par rapport à la verticale, et de préférence entre 30 et 45°. Par exemple, dans le cas de l'application de l'invention à un véhicule montrant une masse supérieure à 1900 kg, l'homme du métier aura avantage à privilégier un effort de sortie important et à choisir un angle de chanfrein supérieur à 45° ; par exemple, un angle compris entre 45 et 90°; préférentiellement, entre 45 et 60°.

Le rapport entre le diamètre D1 de l'ouverture et le diamètre D5 de la partie interne est avantageusement compris entre 0,60 et 0,95 ; de préférence entre 0,65 et 0,90. Plus ce rapport est proche de 1 moins l'effort de sortie sera important. Par exemple, dans le cas de l'application de l'invention à un véhicule montrant une masse inférieure à 1900 kg, l'homme du métier aura avantage à privilégier un effort de sortie moins important et à choisir un rapport de diamètre D1/D5 compris entre 0,75 et 0,90. Par exemple, un diamètre d'ouverture de 40 mm associé à un diamètre D5 montré par le bloc de 45 mm donne un rapport de diamètre D1/D5 d'environ 0.89.

## Revendications

1. Véhicule (1) automobile à motorisation électrique ou hybride comprenant une paire de longeronnets (3) et un berceau arrière (5) agencé pour supporter un groupe de propulsion électrique (7), le berceau arrière (5) comprend une zone centrale s'étendant selon la direction transversale du véhicule et prolongée à chacune de ses extrémités par deux bras (9, 11), respectivement un bras avant (9) et un bras arrière (11), le berceau arrière (5) est fixé aux longeronnets (3) par ses bras avant et arrière (9, 11); le véhicule (1) est **caractérisé en ce que** la fixation de chacun des bras arrière (11) du berceau arrière (5) sur les longeronnets se fait au moyen d'un dispositif de fixation (17) en deux parties (19, 29) configurées pour se séparer sous l'action d'une force de traction supérieure à un seuil prédéterminé ; de préférence, ladite force de traction est orientée verticalement.

2. Véhicule automobile selon la revendication 1, **caractérisé en ce que** le dispositif de fixation (17) comprend une partie externe (19) et une partie interne (29), la partie externe (19) formant un logement et la partie interne (29) comprenant au moins un bloc, le ou les blocs étant disposés dans le logement.

3. Véhicule automobile selon la revendication 1 ou 2, **caractérisé en ce qu'**une des parties (19,29) est fixée à un des bras arrière (11) du berceau arrière (3) et l'autre partie (19,29) est fixée à un des longeronnets (5); de préférence, le dispositif de fixation (17) comprend une partie externe (19) et une partie interne (29) et la partie externe (19) est fixée à un des bras arrière (11) du berceau arrière (5) et la partie interne (29) est fixée à un des longeronnets (3) par l'intermédiaire d'un axe (31).

4. Véhicule automobile selon l'une des revendications 1 à 3, **caractérisé en ce que** le dispositif de fixation (17) comprend une partie externe (19) et une partie interne (29), et **en ce que** la partie externe (19) comprend au moins une paroi latérale (21) et comprend en outre une paroi supérieure (23) et une paroi inférieure (25) et **en ce qu'**au moins la paroi supérieure (23) et/ou la paroi inférieure (25) comprend une ouverture pour le passage d'un axe (31).

5. Véhicule automobile selon la revendication 4, **caractérisé en ce que** le rapport entre le diamètre de l'ouverture montrée par la paroi supérieure (23) et/ou la paroi inférieure (25) et le diamètre du ou d'au moins un des blocs est compris entre 0,60 et 0,95 ; de préférence entre 0,75 et 0,90.

6. Véhicule automobile selon l'une des revendications 4 ou 5, **caractérisé en ce que** l'ouverture montrée par la paroi supérieure (23) et/ou la paroi inférieure (25) est circonvenue par un chanfrein (27) formant un angle avec la ou les parois latérales (21) compris entre 30 et 60° ; de préférence compris entre 30 et 45°.

7. Véhicule automobile selon l'une des revendications 4 à 6, **caractérisé en ce que** la paroi supérieure (23) et/ou inférieure (25) est assemblée à la ou une des parois latérales (21) par des vis de fixation ; de préférence, par au moins trois vis de fixation.

8. Véhicule automobile selon l'une des revendications 1 à 7, **caractérisé en ce que** le dispositif de fixation (17) comprend une partie externe (19) et une partie interne (29), la partie interne (29) comprenant au moins un bloc et **en ce que** le ou les blocs sont constitués par un matériau élastique déformable choisi dans la liste comprenant le cis 4-polyisoprène, le polyisoprène synthétique, le polybutadiène, le copolymère styrène-butadiène, le polyisobutylène, le chloroprène, le copolymère butadiène-acrylonitrile, le copolymère éthylène-propylène, le terpolymère, le polyéther bloc amide, les thermoplastiques élastomères, les polyuréthanes, les polysulfures, les élastomères silicone, les fluoroélastomères, les perfluoroélastomères, le copolymère éthylène-acétate de vinyle, les élastomères polyacryliques, le polyéthylène chlorosulfoné, les élastomères d'épichlorhydrine ; de préférence, choisi dans la liste comprenant les élastomères silicone, les thermoplastiques élastomères et les polyuréthanes.

9. Véhicule automobile selon l'une des revendications 1 à 8, **caractérisé en ce que** le dispositif de fixation (17) comprend une partie externe (19) et une partie interne (29), la partie interne (29) comprenant au moins un bloc et **en ce que** le ou les blocs sont montés sur un axe (31) et retenus en position sur ledit axe (31) par au moins une bague (33, 35).

10. Utilisation d'un dispositif de fixation (17) pour la fixation d'un bras arrière (11) d'un berceau arrière (5) multi-bras sur un longeronnet (3) d'un véhicule (1) automobile à motorisation électrique ou hybride, l'utilisation étant **caractérisée en ce que** le dispositif de fixation (17) comprend deux parties (19, 29) respectivement une partie externe (19) et une partie interne (29), la partie externe (19) formant un logement et la partie interne (29) comprenant au moins un bloc, le ou les blocs étant disposés dans le logement, les deux parties (19,29) étant configurées pour se séparer sous l'action d'une force de traction supérieure à un seuil prédéterminé ; de préférence, ladite force de traction est orientée verticalement.

## Patentansprüche

1. Elektromotorisches oder hybrides Kraftfahrzeug (1) mit einem Paar von Längsträgern (3) und einem hinteren Schlitten (5), der zur Abstützung eines elektrischen Antriebsaggregats (7) angeordnet ist, wobei der hintere Schlitten (5) einen zentralen Bereich aufweist, der sich in Querrichtung des Fahrzeugs erstreckt und an jedem seiner Enden durch zwei Arme (9, 11) verlängert ist 1) ist die hintere Wiege (5) mit ihren vorderen und hinteren Armen (9, 11) an den Längsträgern (3) befestigt; Das Fahrzeug (1) zeichnet sich dadurch aus, dass die Befestigung jedes der Hinterarme (11) des Hintergestells (5) an den Längsträgern mittels einer zweiteiligen Befestigungseinrichtung (17) erfolgt, die so ausgebildet ist, dass sie sich unter Einwirkung einer Zugkraft oberhalb einer vorgegebenen Schwelle trennt. Vorzugsweise ist die Zugkraft vertikal ausgerichtet.

2. Kraftfahrzeug nach Anspruch 1, **dadurch gekennzeichnet, dass** die Befestigungsvorrichtung (17) einen Außenteil (19) und einen Innenteil (29) umfasst, wobei der Außenteil (19) eine Aufnahme bildet und der Innenteil (29) mindestens einen Block umfasst, wobei der oder die Blöcke in der Aufnahme angeordnet sind.

3. Kraftfahrzeug nach Anspruch 1 oder 2, **dadurch gekennzeichnet, dass** einer der Teile (19, 29) an einem der hinteren Arme (11) des hinteren Gestells (3) und der andere Teil (19, 29) an einem der Längsträger (5) befestigt ist; Vorzugsweise umfasst die Befestigungsvorrichtung (17) einen Außenteil (19) und einen Innenteil (29), und der Außenteil (19) ist an einem der Hinterarme (11) des Hintergestells (5) befestigt und der Innenteil (29) ist an einem der Längsträger (3) über eine Achse (31) befestigt.

4. Kraftfahrzeug nach einem der Ansprüche 1 bis 3, **dadurch gekennzeichnet, dass** die Befestigungsvorrichtung (17) einen Außenteil (19) und einen Innenteil (29) umfasst, und dass der Außenteil (19) mindestens eine Seitenwand (21) umfasst und ferner eine obere Wand (23) und eine untere Wand (25) umfasst, und zwar nur Mindestens die obere Wand (23) und/oder die untere Wand (25) umfasst eine Öffnung zum Durchtritt einer Achse (31).

5. Kraftfahrzeug nach Anspruch 4, **dadurch gekennzeichnet, dass** das Verhältnis des Durchmessers der von der oberen Wand (23) und/oder der unteren Wand (25) gezeigten Öffnung zum Durchmesser des oder mindestens eines der Blöcke zwischen 0,60 und 0,95 liegt; vorzugsweise zwischen 0,75 und 0,90.

6. Kraftfahrzeug nach einem der Ansprüche 4 oder 5, **dadurch gekennzeichnet, dass** die von der oberen Wand (23) und/oder der unteren Wand (25) gezeigte Öffnung durch eine Abschrägung (27) erfolgt, die einen Winkel zu der oder den Seitenwänden (21) zwischen 30 und 60° bildet; vorzugsweise zwischen 30 und 45°.

7. Kraftfahrzeug nach einem der Ansprüche 4 bis 6, **dadurch gekennzeichnet, dass** die obere (23) und/oder untere (25) Wand mit der oder einer der Seitenwände (21) durch Befestigungsschrauben verbunden ist; vorzugsweise durch mindestens drei Befestigungsschrauben.

8. Kraftfahrzeug nach einem der Ansprüche 1 bis 7, **dadurch gekennzeichnet, dass** die Befestigungsvorrichtung (17) einen äußeren Teil (19) und einen inneren Teil (29) umfasst, wobei der innere Teil (29) mindestens einen Block umfasst, und dass der oder die Blöcke aus einem verformbaren elastischen Material bestehen, das aus der Liste ausgewählt ist, die aus cis-4-Polyisopren, synthetischem Polyisopren, Polybutadien, Styrol-Butadien-Copolymer, Polyisobutylen, Chloropren, Butadien-Acrylnitril-Copolymer, Ethylen-Propylen-Copolymer, Terpolymer, Polyetherblockamid, Elastomere, Polyurethane, Polysulfide, Siliconelastomere, Fluorelastomere, Perfluorelastomere, Ethylen-Vinylacetat-Copolymer, Polyacrylelastomere, Polychlorsulfone Epichlorhydrin; vorzugsweise ausgewählt aus der Liste der Siliconelastomere, Elastomerthermoplaste und Polyurethane.

9. Kraftfahrzeug nach einem der Ansprüche 1 bis 8, **dadurch gekennzeichnet, dass** die Befestigungsvorrichtung (17) einen Außenteil (19) und einen Innenteil (29) umfasst, wobei der Innenteil (29) mindestens einen Block umfasst, und dass der oder die Blöcke auf einer Achse (31) angebracht und an der Achse (31) durch mindestens einen Ring in Position gehalten sind (33, 35).

10. Verwendung einer Befestigungsvorrichtung (17) zur Befestigung eines hinteren Arms (11) eines Mehrarmhintergestells (5) an einem Längsträger (3) eines Kraftfahrzeugs (1) mit Elektromotor oder Hybridantrieb, **dadurch gekennzeichnet, dass** die Befestigungsvorrichtung (17) zwei Teile (19, 29) umfasst Außenteil (19) und Innenteil (29), wobei der Außenteil (19) ein Gehäuse bildet und der Innenteil (29) mindestens einen Block umfasst, wobei der oder die Blöcke in dem Gehäuse angeordnet sind, wobei die beiden Teile (19, 29) so konfiguriert sind, dass sie sich unter der Wirkung einer Zugkraft von mehr als einem vorbestimmten Schwellenwert trennen; Vorzugsweise ist die Zugkraft vertikal ausgerichtet.

## Claims

1. An electric or hybrid motor vehicle (1) consisting of a pair of wrists (3) and a rear cradle (5) designed to support an electric propulsion group (7), the rear cradle (5) consists of a central area extending according to the transverse direction of the vehicle and extending at each end by two arms (9, 11), respectively a front arm (9) and a rear arm (11), the rear cradle (5) is attached to the longeronets (3) by its front and rear arms (9, 11); the vehicle (1) is **characterized by** the fact that each of the rear arms (11) of the rear cradle (5) is fastened on the ringpins by means of a two-part (19, 29) attachment device (17) configured to separate under the action of a tensile force greater than a predetermined threshold; preferably, the said traction force is oriented vertically.

2. Motor vehicle according to Claim 1, characterized as the attachment device (17) includes an external part (19) and an internal part (29), the external part (19) forming a housing unit and the internal part (29) comprising at least one block, the block(s) being arranged in the unit.

3. Motor vehicle according to Claim 1 or 2, characterized as one part (19, 29) is attached to one of the rear arm (11) of the rear cradle (3) and the other part (19, 29) is attached to one of the longeronets (5); preferably, the attachment device (17) includes an external part (19) and an internal part (29) and the external part (19) is attached to one of the rear arm (11) of the rear cradle (5) and the internal part (29) is attached to one of the longeronets (3) through an axis (31).

4. Motor vehicle according to one of claims 1 to 3, characterized as the attachment device (17) includes an external part (19) and an internal part (29), and as the outer part (19) includes at least one side wall (21) and also includes a upper wall (23) and a lower wall (25) and in that case at least the upper wall (23) and/or the lower wall (25) includes an opening for the passage of an axis (31).

5. Motor vehicle according to Claim 4, characterized as the ratio between the opening diameter shown by the upper wall (23) and/or the lower wall (25) and the diameter of the block(s) of at least one block is between 0,60 and 0,95; preferably between 0,75 and 0,90.

6. Motor vehicle according to one of claims 4 or 5, characterized as the opening shown by the upper wall (23) and/or the lower wall (25) is circumscribed by a chamfer (27) forming an angle with the side wall(s) (21) between 30 and 60°; preferably between 30 and 45°.

7. Motor vehicle according to one of claims 4 to 6, characterized as the upper wall (23) and/or lower wall (25) is assembled to the side wall(s) (21) by fastening screws; preferably with at least three fastening screws.

8. Motor vehicle according to one of claims 1 to 7, characterized as the fastening device (17) includes an external part (19) and an internal part (29), the internal part (29) includes at least one block and the block(s) are made up of a deformable elastic material chosen from the list comprising cis 4-polyisoprene, polyisoprene Synthetic ene, polybutadiene, styrene-butadiene copolymer, polyisobutylene, chloroprene, butadiene-acrylonitrile copolymer, ethylene-propylene copolymer, terpolymer, polyether block amide, elastomeric thermoplastics, polyurethanes, polysulfides, elastomers, fluoroelastomers, perfluoroelastomers, copolymers, Ethylene-vinyl acetate era, polyacrylic elastomers, polyethylene chlorosulfoné, epichlorhydrin elastomers; preferably, chosen from the list including silicone elastomers, elastomeric thermoplastics and polyurethanes.

9. Motor vehicle according to one of claims 1 to 8, characterized as the fastening device (17) includes an external part (19) and an internal part (29), the internal part (29) comprising at least one block and the block(s) are mounted on an axis (31) and held in position on that axis (31) by at least one ring (33, 35).

10. Use of a fastening device (17) for the attachment of a rear arm (11) of a multi-arm rear cradle (5) on a longeronnet (3) of a vehicle (1) electric or hybrid motor vehicle, the use being **characterized by** the fact that the fastening device (17) consists of two parts (19, 29), respectively. external part (19) and internal part (29), the external part (19) forming a housing unit and the internal part (29) comprising at least one block, the block(s) being placed in the housing, the two parts (19,29) being configured to separate under the action of a tensile force greater than a predetermined threshold; preferably, the said traction force is oriented vertically.
